# EUROPEAN PATENT SPECIFICATION

(11) **EP 2 105 358 B1**
(45) Date of publication and mention of the grant of the patent: **29.05.2013**
(21) Application number: 08169597.5
(22) Date of filing: 21.11.2008
(51) Int. Cl.: B60R 21/36

(54) **Airbag device**
Airbagvorrichtung
Dispositif d'airbag

(30) Priority: 27.03.2008 JP 2008083183
(43) Date of publication of application: 30.09.2009
(73) Proprietor: TAKATA CORPORATION, Tokyo 106-8510 (JP)
(72) Inventor: Kumagai, Masayoshi, Tokyo 106-8510 (JP); Nakamura, Atsushi, Tokyo 106-8510 (JP)
(74) Representative: Vossius & Partner

(56) References cited:
- EP-A- 2 050 632
- EP-A- 2 050 635
- WO-A-02/079009
- GB-A- 2 397 559
- JP-A- 2005 096 686
- JP-A- 2006 298 150

## Description

The present invention belongs to a technical field of an airbag device for lessening an impact applied to a collision object and a vehicle by being inflated by gas from an inflator or the like and extending into the outside of the vehicle in the event of an emergency such as a collision of the vehicle with the collision object or the like.

Hitherto, there has been a device that allows an airbag to extend to the outside of a pillar portion of a vehicle in the event of a collision between a vehicle and a pedestrian or the like, and lessens the impact arising when the pedestrian or the like comes again into collision with the vehicle. There is disclosed an airbag device, for example, the impact lessening ability of which is improved in a manner such that, when an airbag bag body thereof is inflated at the upper front of a pillar portion, a cover is allowed to extend to the outside in a vehicle width direction, and the airbag bag body is inflated toward the inside in the vehicle width direction, while being held at the position where it is inflated (refer to JP-A-2002-283939 (Patent Document 1)).

The expansion of the airbag body toward the outer side of the vehicle is restrained to a predetermined amount by a cloth connecting an attachment portion of the airbag body with a sewn portion when the airbag body is expanded. In the embodiment shown in Figure 10, a strap is disposed in an upper surface of the expanded airbag body as a connecting member which serves as expanding direction control means.

JP-2005-096686 A relates to an airbag arrangement in which an airbag is arranged along a front pillar and covered with a garnish. During inflation of the airbag, the garnish is rotated so that the colliding body contacts the garnish which presses a wide area of the airbag.

GB-A-2 397 559 relates to an airbag arrangement for windscreen and A-pillar comprising a metallic airbag and a gas generator, wherein on inflation the airbag extends over at least part of a windscreen and part of an adjacent A-pillar. The airbag may be constructed from two superimposed sheets of a material such as plastically deformable stainless steel, welded together at a peripheral seam, and may comprise a vent hole. A hinge may facilitate movement away from the pillar on inflation.

JP 2006-298150 A relates to an airbag apparatus which is intended to be disposed along a front pillar so as to be inflated outside a vehicle. In order to provide an efficient shock absorption without excessively narrowing the field of view of an occupant, the airbag elements are superimposed at superimposing portions and bonded to one another with an adhesive agent. A superimposed state in a developing direction is kept even in a deploying state, so that a shock can be efficiently absorbed by securing a deformation distance for absorbing the shock without increasing the sides of the single airbag element.

Document WO 02/079009 describes an airbag device, comprising:
- an airbag;
- an inflator blowing gas into the airbag;
- a detection means for detecting a collision; and
- a control means for causing the inflator to be activated in accordance with a signal from the detection means, the airbag being disposed along a front pillar and being to be inflated at the outside of a vehicle,
   the airbag further comprising:
- an inflated portion inflated by activation of the inflator;
- a first securing portion secured to a roof side of the vehicle body by being connected to the inflated portion via a first connecting portion;
- a second securing portion secured to the vehicle body and being connected to the inflated portion via a second connecting portion; and
- a gas suction portion for sucking gas from the inflator,
   wherein
- the first securing portion is disposed on one side of the inflated portion in its longitudinal direction,
- the second securing portion is disposed on the other side of the inflated portion in its longitudinal direction.

There is also disclosed an airbag device that is provided with tethers for serving to complete the inflation of an airbag in a state in which the airbag quickly covers left and right pillar portion, by suppressing fluttering of left and right pillar protecting portions of the airbag (refer to JP-A-2004-299442 (Patent Document 2)).

However, in the airbag device described in Patent Document 1, control of extension only in a vehicle width direction is described. And, in the airbag device described in Patent Document 2, since tethers are provided at the outer peripheral edge of an airbag, the airbag flutters and does not become stable when inflated and also after inflated.

The present invention addresses the above problems with the object of providing an airbag device that receives a pedestrian or the like properly and softly by being inflated in a stable state.

In order to solve the problems described above, the invention provides an airbag device that includes an airbag, an inflator blowing gas into the airbag, a detection means for detecting a collision, and a control means for causing the inflator to be activated in accordance with a signal from the detection means, the airbag being disposed along a front pillar and being inflated at the outside of a vehicle, it is characterized that the airbag includes an inflated portion inflated by activation of the inflator, a first securing portion secured to a vehicle body by being connected through the inflated portion and a first connecting portion, and a second securing portion secured to the vehicle body by being connected through the inflated portion and a second connecting portion, wherein the first securing portion is disposed on one side of the inflated portion in its longitudinal direction, the second securing portion is disposed on the other side of the inflated portion in its longitudinal direction, and the second connecting portion is disposed at a position apart from an airbag outer rim.

The first connecting portion is disposed at the airbag outer rim.

The first connecting portion is disposed at a position further apart from the vehicle body as compared to the second connecting portion at the time of inflation.

The airbag includes a gas suction portion for sucking gas from the inflator, and connects the gas suction portion and the second connecting portion.

The gas suction portion includes a stiffening portion, and connects the stiffening portion and the second connecting portion.

The airbag device according to the present invention configured as described above causes the airbag not to flutter at the beginning of inflation and to be held stably at the position in a state of being pulled to the side of the vehicle body when inflated, since it is provided with an airbag, an inflator blowing gas into the airbag, a detection means for detecting a collision, and a control means for causing the inflator to be activated in accordance with a signal from the detection means, the airbag being disposed along a front pillar and being to be inflated at the outside of a vehicle, and the airbag includes an inflated portion inflated by activation of the inflator, a first securing portion secured to a vehicle body by being connected through the inflated portion and a first connecting portion, and a second securing portion secured to the vehicle body by being connected through the inflated portion and a second connecting portion, wherein the first securing portion is disposed on one side of the inflated portion in its longitudinal direction, the second securing portion is disposed on the other side of the inflated portion in its longitudinal direction, and the second connecting portion is disposed at a position apart from an airbag outer rim.

And, since the first connecting portion is disposed at the airbag outer rim, mounting to the vehicle body is facilitated.

And, since the first connecting portion is disposed at a position further apart from the vehicle body as compared to the second connecting portion at the time of inflation, the airbag is held stably at the position in a state of being pulled to the side of the vehicle body when inflated.

And, since the airbag includes a gas suction portion for sucking gas from the inflator, and connects the gas suction portion and the second connecting portion, it does not flutter at the beginning of inflation when the gas is sucked, and can be stably inflated.

And, since the gas suction portion includes a stiffening portion, and connects the stiffening portion and the second connecting portion, the strength of the second connecting portion can be increased.

An embodiment of the present invention will be described below with reference to the attached drawings:
Fig. 1 is a view showing an embodiment of an airbag according to the present invention;
Fig. 2 is a perspective view of a vehicle to which an airbag device of this embodiment is mounted;
Fig. 3 is a perspective view of the vicinity of a front pillar of the vehicle of this embodiment;
Fig. 4 is a cross-section view taken from line a-a of Fig. 3;
Figs. 5 are views showing the actuation of the airbag device of this embodiment;
Fig. 6 is a perspective view of the vicinity of the front pillar in a completion stage of inflation;
Fig. 7 is a cross-section view taken from line b-b of Fig. 6; and
Fig. 8 is a magnified view of the vicinity of an anchor 14.

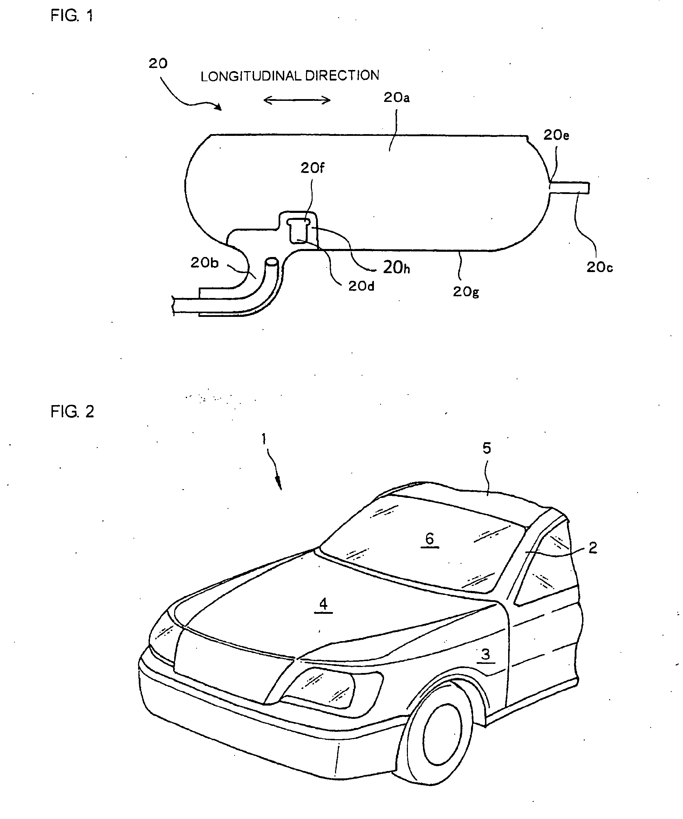

Fig. 1 shows an airbag 20 of this embodiment. The airbag 20 of this embodiment is formed by folding back a sheet of base fabric and sewing it, and is constituted of an inflated portion 20a, a gas suction portion 20b, a first securing portion 20c, a second securing portion 20d, and the like.

The inflated portion 20a has a substantially oval shape and serves as a portion for lessening an impact applied to a collision object such as a pedestrian or the like when inflated. The gas suction portion 20b projects in a direction intersecting to the longitudinal direction of the inflated portion 20a and serves as a portion where a pipe 16 is inserted and crimped. It is noted that the gas suction portion 20b is constructed as a stiffening portion 20h in the inflated portion 20a of the airbag by overlaying a stiffening fabric and serves to increase the strength of the airbag. It is also noted that, although the whole of the gas suction portion 20b is formed as the stiffening portion 20h, the stiffening portion 20h may be provided in a portion of the gas suction portion 20b.

The first securing portion 20c, which is a portion for securing the airbag 20 to a vehicle body on its roof side, is provided via a first connecting portion 20e positioned at an airbag outer rim 20g on one end side in the longitudinal direction of the inflated portion 20a of the airbag 20.

The second securing portion 20d, which is a portion for securing the airbag 20 to the vehicle body, is provided to protrude in the gas suction portion 20b in the region of the inflated portion 20a via a second connecting portion 20f, where is apart from the airbag outer rim 20g. Incidentally, it is preferable that the second connecting portion 20f is connected at the stiffening portion, since the strength thereof is increased. Due to the configuration described above, the position at the time of inflation is held as compared to the case of being connected at the vicinity of a stitched portion in a part of the airbag outer rim 20g.

In addition, the first connecting portion 20e of the first securing portion 20c is configured so as to be disposed at a position further apart from the vehicle body as compared to the second connecting portion 20f of the second securing portion 20d.

Next, the state in which an airbag device 10 including the airbag 20 is mounted to a vehicle 1 will be described.

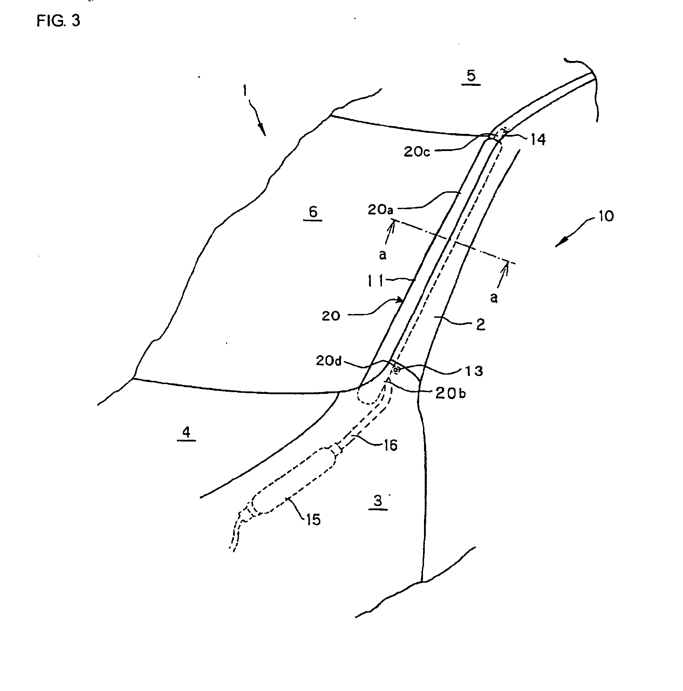

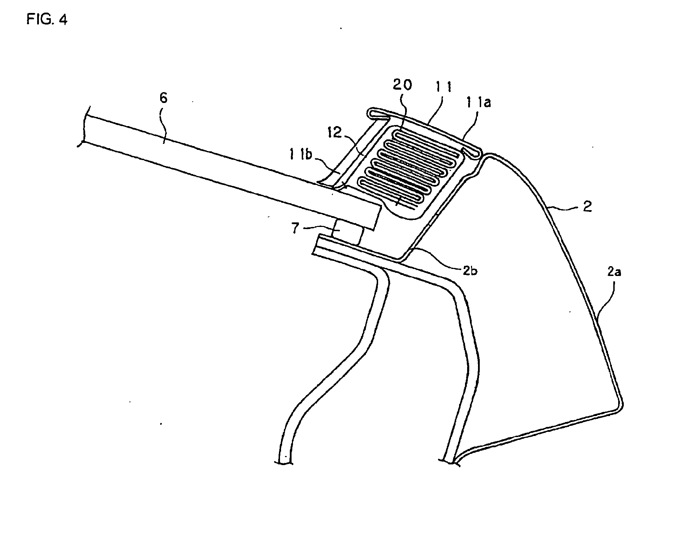

Fig. 2 is a perspective view of a vehicle to which the airbag device of this embodiment is mounted, Fig. 3 is a perspective view of the vicinity of a front pillar of the vehicle of this embodiment, and Fig. 4 is a cross-section view taken from line a-a of Fig. 3.

In the drawings, reference numeral 1 denotes a vehicle, 2 denotes a front pillar, 3 denotes a fender, 4 denotes a hood, 5 denotes a roof, 6 denotes a window shield, 7 denotes a seal, 10 denotes an airbag device, 11 denotes a cover, 12 denotes an airbag case, 13, 14 each denote an anchor, 15 denotes an inflator, 16 denotes a pipe, and 20 denotes an airbag.

The vehicle 1 includes the front pillar 2 connecting the fender 3 and the roof 5; it also includes the window shield 6, which is enclosed with the hood 4, the roof 5 and the front pillar 2, and is mounted through the intermediary of the seal 7.

The airbag device 10 is accommodated in the space adjacent to the front pillar 2 on the side of the window shield 6 and the fender 3. The front pillar 2 has a first face 2a facing the outside of the vehicle 1 and a second face 2b facing the window shield side, and on the side of second face 2b the airbag 20 is accommodated in the cover 11 in a state of being folded and housed in the bag case 12.

The cover 11 is composed of a member having a substantially L-shaped cross-section and including an upper cover 11a and a side cover 11b, and is disposed so as to conceal the airbag 20 having been folded in the side of the second face 2b of the front pillar 2. It is noted that the folded airbag 20 may be not housed in the bag case 12 but directly accommodated in the cover 11.

The first securing portion 20c is secured to a vehicle body side member such as the roof 5 or the like by the anchor 14, and the second securing portion 20d is secured to a vehicle body side member such as the fender 3 or the like by the anchor 13.

In the fender 3, there are accommodated the inflator 15 generating gas for inflating the airbag 20, the pipe 16 for supplying the gas generated by the inflator 15 to the airbag 20, and the like. It is noted that a configuration in which the gas is directly discharged into the airbag without using the pipe 16 may be employed.

It is also noted that the second securing portion 20d may be configured so as to be secured to the inflator 15.

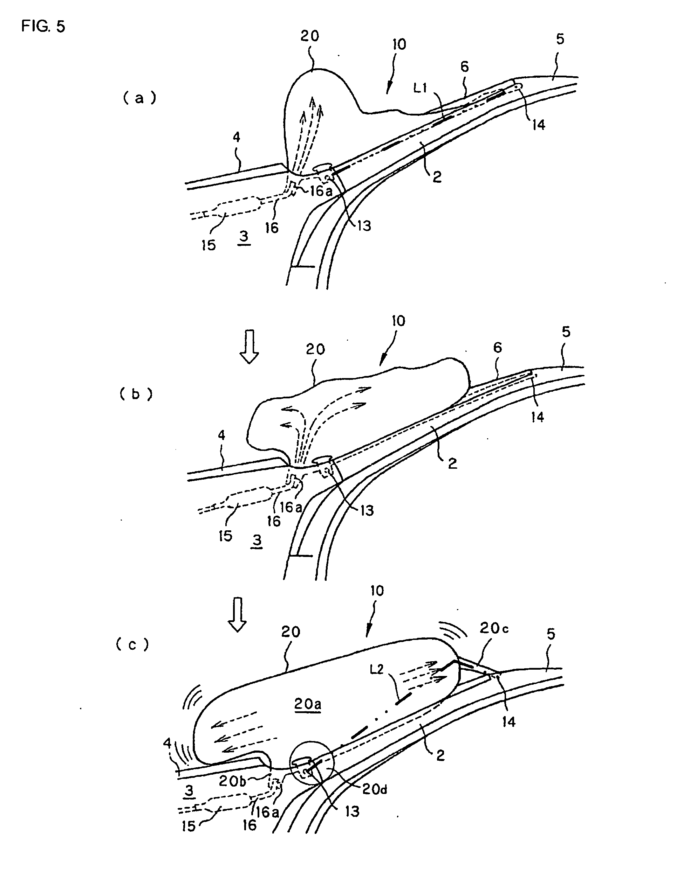

Next, the actuation of the airbag device 10 of this embodiment will be described. Figs. 5 are views showing the actuation of the airbag device 10 of this embodiment.

The airbag device 10 in a state of accommodation shown in Fig. 3 is activated by a control means or the like in accordance with a detected signal in the case when an impact arising in a vehicle 1 is detected by an unshown detection means or the like, in the event of collision of the vehicle 1 with an unshown collision object.

Fig. 5(a) shows an early stage of inflation in which the airbag device 10 is just activated and the airbag 20 starts to be inflated as gas flows thereinto via the pipe 16 from the inflator 15 accommodated in the fender 3. In the early stage of inflation, the airbag 20 starts to be inflated from the direction in which a pipe blow-out port 16a is oriented, and the cover 11 shown in Fig. 4 is opened due to inflation pressure. At the beginning of inflation, the inflation direction of the airbag 20 is restricted to the side of the vehicle body by being pulled by the second securing portion 20d.

Fig. 5(b) shows a medium stage of inflation in which the airbag 20 is being continuously inflated as the gas flows thereinto via the pipe 16 from the inflator 15. In the medium stage of inflation, the airbag 20 is inflated from a state of being folded due to the gas flowing in the direction toward each of the front and rear of the vehicle, and is fully exposed to the outside.

Fig. 5(c) shows a completion stage of inflation in which the inflation of the airbag 20 is completed. In the completion stage of inflation, the airbag 20 is fully inflated. The state of the airbag 20 in the completion stage of inflation will be described below.

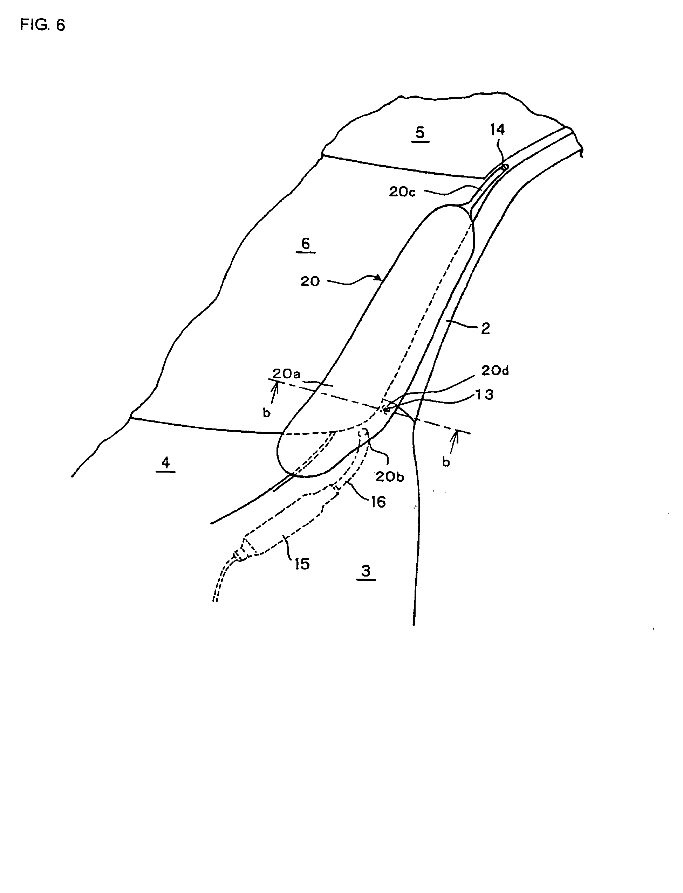

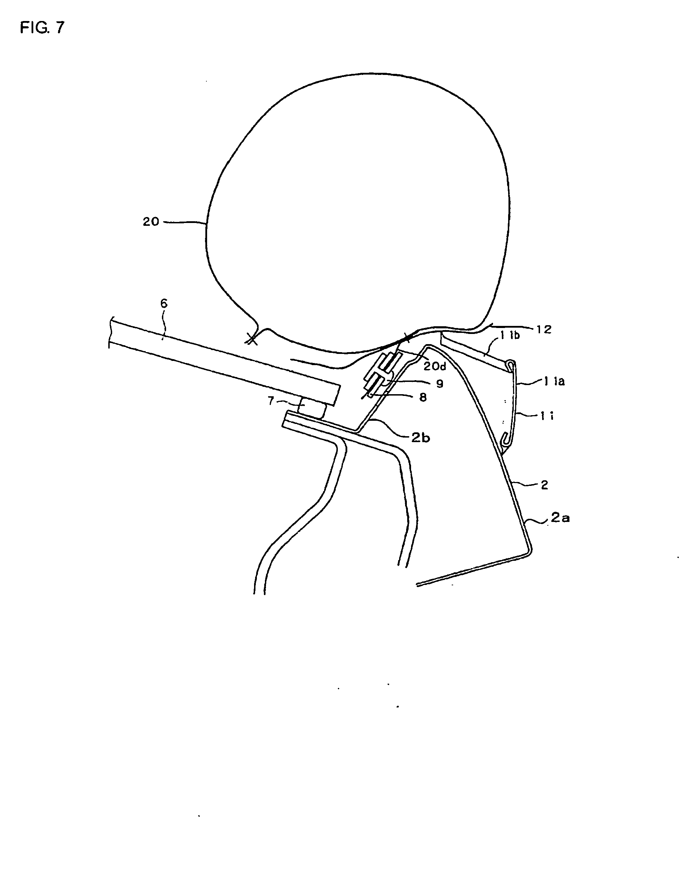

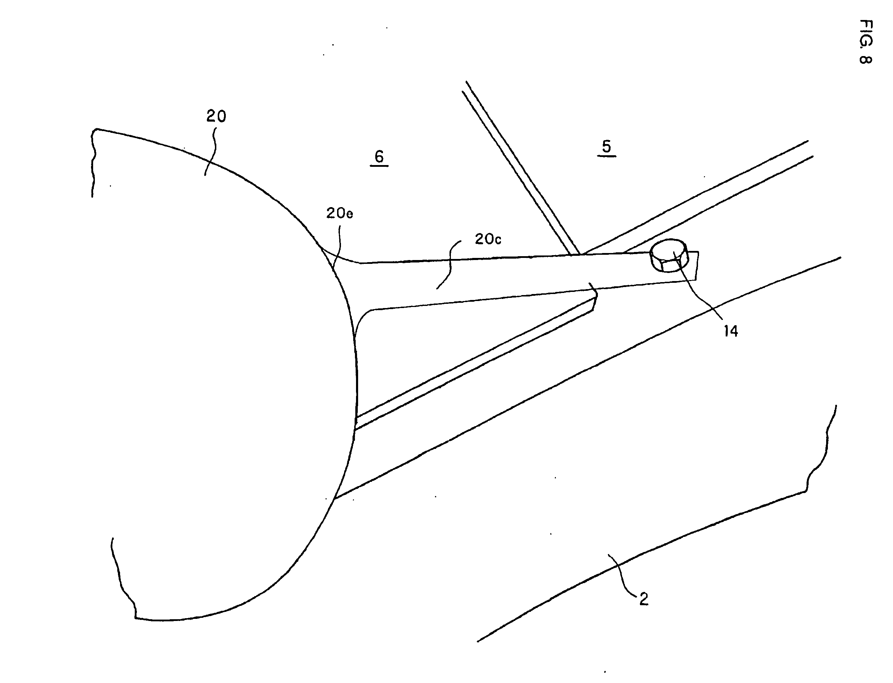

Fig. 6 is a perspective view of the vicinity of the front pillar 2 in a completion stage of inflation, Fig. 7 is a cross--section view taken from line b-b of Fig. 6, and Fig. 8 is a magnified view of the vicinity of the anchor 14.

a completion stage of inflation, the airbag 20 extends in a direction along the front pillar 2 in a space in front of the front pillar 2 and above both portions of the fender 3 and the hood 4.

At this time, the second securing portion 20d is pushed to the vehicle body side by the anchor 13 against the inflation of the airbag 20.

As shown in Fig. 7, in the completion stage of inflation, the cover 11 is separated from the front pillar 2 due to the inflation pressure. Furthermore, the airbag 20 is inflated so as to be drawn to the side of the front pillar 2 by the second securing portion 20d, which is secured to the front pillar 2 by being fixed to a bracket 8 with a rivet 9 or the like. Therefore, the movement of the airbag 20 when inflated is reduced and it can be stably inflated.

Moreover, as shown in Fig. 8, the first securing portion 20c of the airbag 20 is pulled to the side of the roof 5 by the anchor 14 against the inflation of the airbag 20. Because of this, the length of the line L2, shown in Fig. 5(c), on the base fabric of the airbag 20 connecting between the first securing portion 20c and the second securing portion 20d after the airbag is inflated becomes longer than the length of the line L1, shown in Fig. 5(a), on the base fabric of the airbag 20 connecting between the first securing portion 20c and the second securing portion 20d at the beginning of inflation of the airbag 20, so the airbag 20 is placed in a state of being pulled to the side of the window shield 6 and the front pillar 2, and is enabled to be held stably at the position.

Like this, according to this embodiment, in the airbag device 10 that includes the airbag 20, which is disposed along a front pillar 2 and to be inflated at the outside of a vehicle, the inflator 15 blowing gas into the airbag 20, the detection means for detecting a collision, and the control means for causing the inflator 15 to be activated in accordance with a signal from the detection means, the airbag 20 includes the inflated portion 20a inflated by activation of the inflator 15, the first securing portion 20c secured to the vehicle body by being connected through the inflated portion 20a and the first connecting portion 20e, and the second securing portion 20d secured to the vehicle body by being connected through the inflated portion 20a and the second connecting portion 20f, wherein the first securing portion 20c is disposed on one side of the inflated portion 20a in its longitudinal direction, the second securing portion 20d is disposed on the other side of the inflated portion 20a in its longitudinal direction, and the second connecting portion 20f is disposed at a position apart from the airbag outer rim 20g, so the airbag 20 does not flutter at the beginning of inflation and is held stably at the position in a state of being pulled to the side of the vehicle body when inflated.

And, since the first connecting portion 20e is disposed at the airbag outer rim 20g, mounting to the vehicle body is facilitated.

And, since the first connecting portion 20e is disposed at a position further apart from the vehicle body as compared to the second connecting portion 20f, the airbag is held stably at the position in a state of being pulled to the side of the vehicle body when inflated.

And, since the airbag 20 includes the gas suction portion 20b for sucking gas from the inflator 15, and connects the gas suction portion 20b and the second connecting portion 20f, it does not flutter at the beginning of inflation when the gas is sucked, and can be stably inflated.

And, since the gas suction portion 20b includes the stiffening portion 20h, and connects the stiffening portion 20h and the second connecting portion 20f, the strength of the second connecting portion 20f can be increased.

An airbag device according to the present invention causes an airbag not to flutter at the beginning of inflation and to be held stably at the position in a state of being pulled to the side of a vehicle body when inflated, since it is provided with the airbag, which is disposed along a front pillar 2 and to be inflated at the outside of a vehicle, an inflator blowing gas into the airbag, a detection means for detecting a collision, and a control means for causing the inflator to be activated in accordance with a signal from the detection means, and the airbag includes an inflated portion inflated by activation of the inflator, a first securing portion secured to a vehicle body by being connected through the inflated portion and a first connecting portion, and a second securing portion secured to the vehicle body by being connected through the inflated portion and a second connecting portion, wherein the first securing portion is disposed on one side of the inflated portion in its longitudinal direction, the second securing portion is disposed on the other side of the inflated portion in its longitudinal direction, and the second connecting portion is disposed at a position apart from an airbag outer rim.

## Claims

1. An airbag device, comprising:
- an airbag (20);
- an inflator (15) blowing gas into the airbag;
- a detection means for detecting a collision; and
- a control means for causing the inflator (15) to be activated in accordance with a signal from the detection means, the airbag (20) being disposed along a front pillar (2) and being to be inflated at the outside of a vehicle,
the airbag (20) further comprising:
- an inflated portion (20a) inflated by activation of the inflator (15);
- a first securing portion (20c) secured to a roof side (5) of the vehicle body and connected to the inflated portion (20a) via a first connecting portion (20e);
- a second securing portion (20d) secured to the vehicle body and connected to the inflated portion (20a) via a second connecting portion (20f); and
- a gas suction portion (20b) for sucking gas from the inflator (15),
wherein
- the first securing portion (20c) is disposed on one side of the inflated portion (20a) in its longitudinal direction,
- the second securing portion (20d) is disposed on the other side of the inflated portion (20a) in its longitudinal direction, and
- the second connecting portion (20f)
is disposed at a position apart from an airbag outer rim (20g) and
is connected to the gas suction portion (20b) of the airbag (20) and wherein
- in the initial stage of inflation,
the airbag (20) is placed to be pulled to the side of the front pillar (2) by the second securing_portion (20d), and
- in the completed stage of inflation
the airbag is pulled to the side of the front pillar (2) by the second securing portion (20d) and is pulled to the roof side (5) of the vehicle body by the first securing portion (20c), and
the first connecting portion (20e) is disposed at a position further apart from the vehicle body than the second connecting portion (20f).

2. The airbag device according to claim 1, wherein the first connecting portion (20e) is disposed at the airbag outer rim (20g) on one end side in the longitudinal direction of the inflated portion (20a) of the airbag (20).

3. The airbag device according to claim 2, wherein the gas suction portion includes a stiffening portion (20h), and connects the stiffening portion (20h) and the second connecting portion (20f).

## Patentansprüche

1. Airbagvorrichtung mit:
- einem Airbag (20);
- einem Gas in den Airbag blasenden Gasgenerator (15);
- einer Erkennungseinrichtung zum Erkennen einer Kollision; und
- einer Steuereinrichtung, die veranlasst, dass der Gasgenerator (15) entsprechend dem Signal von der Erkennungseinrichtung aktiviert wird, wobei der Airbag entlang einer vorderen Säule (2) angeordnet ist, um an der Fahrzeugaußenseite aufgeblasen zu werden,
wobei der Airbag (20) ferner aufweist:
- einen Aufblasabschnitt (20a), der durch Aktivierung des Gasgenerators (15) aufgeblasen wird;
- einen ersten Sicherungsabschnitt (20c), der an einer Dachseite (5) der Fahrzeugkarosserie befestigt und über einen ersten Verbindungsabschnitt (20e) mit dem Aufblasabschnitt (20a) verbunden ist;
- einen zweiten Sicherungsabschnitt (20d), der an der Fahrzeugkarosserie befestigt und über einen zweiten Verbindungsabschnitt (20f) mit dem Aufblasabschnitt (20a) verbunden ist; und
- einen Gasförderabschnitt (20b) zum Befördern von Gas aus dem Gasgenerator (15),
wobei
- der erste Sicherungsabschnitt (20c) an einer Seite in Längsrichtung des Aufblasabschnitts (20a) angeordnet ist,
- der zweite Sicherungsabschnitt (20d) an der anderen Seite in Längsrichtung des Aufblasabschnitts (20a) angeordnet ist, und
- der zweite Verbindungsabschnitt (20f)
an einer Position abseits eines Airbagaußenrandes (20g) angeordnet und mit dem Gasförderabschnitt (20b) des Airbags (20) verbunden ist,
und wobei
- im Anfangsstadium des Aufblasens
der Airbag (20) so angebracht ist, dass er vom zweiten Sicherungsabschnitt (20d) zur Seite der vorderen Säule (2) gezogen wird, und
- im vollständig aufgeblasenen Zustand
der Airbag vom zweiten Sicherungsabschnitt (20d) zur Seite der vorderen Säule (2) gezogen wird und vom ersten Sicherungsabschnitt (20c) zur Dachseite (5) der Fahrzeugkarosserie gezogen wird, und
der erste Verbindungsabschnitt (20e) an einer weiter entfernt liegenden Position der Fahrzeugkarosserie als der zweite Verbindungsabschnitt (20f) angeordnet ist.

2. Airbagvorrichtung nach Anspruch 1, wobei der erste Verbindungsabschnitt (20e) am Airbagaußenrand (20g) an einer Endseite in Längsrichtung des Aufblasabschnitts (20a) des Airbags (20) angeordnet ist.

3. Airbagvorrichtung nach Anspruch 2, wobei der Gasförderabschnitt einen Aussteifungsabschnitt (20h) aufweist, und den Aussteifungsabschnitt (20h) und den zweiten Verbindungsabschnitt (20f) verbindet.

## Revendications

1. Dispositif d'airbag, comprenant :
- un airbag (20) ;
- un générateur (15) refoulant du gaz dans l'airbag ;
- un moyen de détection permettant de détecter une collision ; et
- un moyen de commande permettant au générateur (15) d'être activé en fonction d'un signal du moyen de détection, l'airbag (20) étant disposé le long d'un montant avant (2) et étant gonflé à l'extérieur d'un véhicule, l'airbag (20) comprenant en outré :
- une partie d'expansion (20a) gonflée par activation du générateur (15) ;
- une première partie de fixation (20c) fixée sur un côté de toit (5) de la caisse du véhicule et reliée à la partie d'expansion (20a) par une première partie de connexion (20e) ;
- une deuxième partie de fixation (20d) fixée à la caisse du véhicule et reliée à la partie d'expansion (20a) par une deuxième partie de connexion (20f) ; et
- une partie d'aspiration de gaz (20b) pour l'aspiration du gaz du générateur (15),
où
- la première partie de fixation (20c) est disposée sur un côté de la partie d'expansion (20a) dans la direction longitudinale de celle-ci,
- la deuxième partie de fixation (20d) est disposée sur l'autre côté de la partie d'expansion (20a) dans la direction longitudinale de celle-ci, et
- la deuxième partie de connexion (20f) est disposée à un emplacement espacé d'une bordure extérieure (20g) d'airbag et est reliée à la partie d'aspiration de gaz (20b) de l'airbag (20),
et où
- lors de la phase initiale du gonflage, l'airbag (20) est disposé pour être tiré vers le côté du montant avant (2) par la deuxième partie de fixation (20d), et
- lors de la phase terminale du gonflage, l'airbag est tiré vers le côté du montant avant (2) par la deuxième partie de fixation (20d) et est tiré vers le côté de toit (5) de la caisse du véhicule par la première partie de fixation (20c), et la première partie de connexion (20e) est disposée à un emplacement plus espacé de la caisse du véhicule que la deuxième partie de connexion (20f).

2. Dispositif d'airbag selon la revendication 1, où la première partie de connexion (20e) est disposée sur la bordure extérieure (20g) d'airbag, sur un côté d'extrémité dans la direction longitudinale de la partie d'expansion (20a) de l'airbag (20).

3. Dispositif d'airbag selon la revendication 2, où la partie d'aspiration de gaz comprend une partie de renforcement (20h), et relie la partie de renforcement (20h) à la deuxième partie de connexion (20f).
